# EUROPÄISCHE PATENTSCHRIFT

(11) **EP 0 717 268 B1**
(45) Veröffentlichungstag und Bekanntmachung des Hinweises auf die Patenterteilung: **07.04.1999**
(21) Anmeldenummer: 95119346.5
(22) Anmeldetag: 08.12.1995
(51) Int. Cl.: G01D 18/00

(54) **Betriebsschaltung für einen Sensor**
Circuit for sensor
Circuit pour capteur

(30) Priorität: 14.12.1994 DE 4444359
(43) Veröffentlichungstag der Anmeldung: 19.06.1996
(73) Patentinhaber: Mannesmann VDO AG, 60326 Frankfurt (DE)
(72) Erfinder: Hanke, Klaus-Dieter, Dipl.-Ing., D-78048 Villingen-Schwenningen (DE); Wangler, Josef, Dipl.-Ing. (FH), D-78052 Villingen-Schwenningen (DE)

(56) Entgegenhaltungen:
- US-A- 5 031 934

## Beschreibung

Die Erfindung betrifft eine Betriebsschaltung für einen Sensor mit einem analogen Ausgangssignal, wobei das Ausgangssignal des Sensors zumindest in dessen bevorzugtem Meßbereich eine annähernd lineare Kennlinie aufweist.

Sensoren zum Erfassen nicht-elektrischer Meßgrößen geben an ihrem Ausgang zumeist ein Signal in Form einer elektrischen Spannung ab, das durch die dem Sensor zugeordnete Betriebsschaltung zu einem transportfähigen und durch die nachfolgende Elektronik auswertbaren Signal aufbereitet werden muß. Zur Sensorsignalverstärkung werden Signalverstärker verwendet, deren Arbeitspunkt sowie Empfindlichkeit und Verstärkungsfaktor durch Spannungsteiler eingestellt werden, die durch ohmsche Widerstände realisiert sind. Zur Einstellung der genannten Parameter des Verstärkers und damit zur Einflußnahme auf die Lage der Kennlinie des Sensors im Meßkennlinienfeld erfolgt ein Abgleich der verwendeten Widerstände zB durch Lasertrimmen oder durch Einlöten weiterer Widerstände zu den bereits vorhandenen Widerständen für den Feinabgleich. Diese Vorgehensweise ist aufwendig und teuer. Gerade das Lasertrimmen erfordert den Einsatz einer sehr teuren Apparatur, die oft mehrere hundert tausend DM kostet. Außerdem ist die durch diese Art des Abgleichs erreichbare Meßgenauigkeit für den Sensors für viele Anwendungen unzureichend, weil nachfolgende Prozeßschritte zur Herstellung einer gebrauchsfähigen, den Sensor enthaltenen Baueinheit negative Rückwirkungen auf die zuvor vorgenommenen Einstellungen nehmen können, zB wenn der Sensor erst nach dem Abgleich in ein Gehäuse eingebettet wird.

Herkömmliche Abgleichprozeduren weisen zudem noch weitere Nachteile auf. Sie erfordern mehrere Arbeitsschritte mit manuellen Eingriffen und sind damit zeitaufwendig. Dennoch erreichen sie letztlich nur eine durch die Toleranzen der verwendeten Widerstände bestimmte Genauigkeit.

Die Nennwerte der benötigten Abgleichwiderstände werden üblicherweise per Rechnung oder Messung ermittelt, wobei das Abgleichverfahren dann wie folgt durchgeführt wird: Zur Ermittlung des Widerstandswertes für die Schaltungsempfindlichkeit wird die den Sensor enthaltende Baueinheit in eine Prüfeinrichtung eingelegt und der Prüfling wird mit einer Meßgröße bekannter Intensität beaufschlagt. Der auf diese Weise ermittelte Wert für die benötigte Verstärkung wird durch zumeist parallel geschaltete Widerstände möglichst gut angenähert und sodann werden die Widerstände eingelötet. In einem nächsten Schritt wird der Nullpunkt der Verstärkungskennlinie abgeglichen. Dazu wird die den Sensor enthaltende Baueinheit erneut in die Prüfeinrichtung eingebracht und nochmals mit einer bekannten Meßgröße beaufschlagt. Wiederum müssen die benötigten Widerstandswerte ermittelt werden, worauf geeignete Widerstände dann in die Schaltung eingebracht werden. In einem dritten Arbeitsschritt wird überprüft, ob bei Beaufschlagung des Sensors mit einem definierten Verlauf der Meßgröße das dem Meßsignal folgende Ausgangssignal innerhalb festgelegter Grenzen bleibt.

Es ist nachteilig, daß die Nennwerte und Toleranzen der eingelöteten Widerstände nicht exakt den Werten entsprechen können, die die mit Präzisionsmeßmitteln ausgestattete Prüfeinrichtung ermittelt hat, weil die in der Prüfeinrichtung verwendeten Meßmittel von anderer Bauart sind als die in der Betriebsschaltung für den Sensor eingesetzten Widerstände.

Es ist teuer und umständlich, einen Prüfling mehrfach an die Prüfeinrichtung anzuschließen und zwischen den einzelnen Arbeitsschritten manuelle Lötarbeiten vorzunehmen. Das dargestellte Abgleichverfahren läßt sich ersichtlich schlecht automatisieren, was sogar dann noch zutrifft, wenn im Prüfling vorhandene Widerstände mittels Laser abgeglichen werden. Wie erläutert, ist es nachteilig, daß bekannte Abgleichverfahren an einem Halbfabrikat durchgeführt werden, weil nachfolgende Fertigungsschritte, wie zB die Einbindung der Schaltung in ein Gehäuse, ungünstige Rückwirkungen auf die eingestellten Abgleichwerte haben können.

Grundsätzlich könnte das zuvor beschriebene Abgleichverfahren auch derart zusammengefaßt werden, daß die Parameter "Nullpunkt" und "Verstärkung" bzw. die dafür erforderlichen Korrekturwiderstände in einem einzigen Arbeitsschritt durch unmittelbar aufeinanderfolgende Beaufschlagung des Prüflings mit zwei Intensitäten ermittelt werden. Der Nachteil eines solchen Verfahrens besteht jedoch darin, daß nach dem Einbringen der Korrekturwiderstände die Abweichung des "Nullpunktes" größer ist als im zweistufigen Abgleichverfahren, da die Toleranzen vom Verstärkungsabgleich und Nullpunktsabgleich zu dem ermittelten Abgleichswert beitragen.

Das Dokument US-A-5 031 934 offenbart eine Betriebsschaltung für einer Sensor, in welcher Schaltelemente den Einstellwiderständen zugeordnet sind, aber nur zur Fixierung eines einzigen Meßwertes. Das Signalverhalten unterhalb und oberhalb dieses einen fixierten Punktes bleibt außer Betracht.

Es ist die Aufgabe der vorliegenden Erfindung, eine Lösung aufzuzeigen, die die vorgenannten Nachteile vermeidet, die also für eine Betriebsschaltung für einen Sensor, dessen Ausgangssignal zumindest in dessen bevorzugtem Meßbereich eine annähernd lineare Kennlinie aufweist, einen auf einfache Weise durchführbaren Abgleich mit hoher Genauigkeit ermöglicht.

Die Aufgabe wird durch die Merkmale des ersten Anspruchs gelöst. Die abhängigen Ansprüche zeigen vorteilhafte Ausgestaltungen der gefundenen Lösung.

Die gefundene Lösung verzichtet vollständig auf ein Hinzufügen von Widerständen oder ein gestaltliches Verändern von vorhandenen Bauteilen. Damit ist das Abgleichverfahren voll automatisierbar, weil bisher notwendige manuelle Eingriffe entfallen. Der Abgleichvorgang kann an einem Fertigerzeugnis, nämlich an der voll gebrauchsfähigen, den Sensor und seine Betriebsschaltung enthaltenden Baueinheit vorgenommen werden. Die gesamte Baueinheit kann in SMD-Technik ausgeführt sein und damit im Vergleich zur bisherigen Ausführung als diskrete Schaltungsanordnung in seiner Baugröße erheblich reduziert werden. Prinzipielle Fehler durch die physikalische Verschiedenheit der Meßmittel in der Prüfeinrichtung zu den Abgleichmitteln in der den Sensor enthaltenden Baueinheit werden vermieden.

Die gefundene Lösung sieht vor, daß die Betriebsschaltung Schaltelemente zur Festlegung des Sollbezugspunktes der Kennlinie sowie zur Einstellung der Steigung der Kennlinie aufweist. Jedes Schaltelement ist durch ein Binärsignal betätigbar, das in einem dem Sensor zugeordneten Halbleiterspeicher hinterlegt ist. Die Schaltstellung der Schaltelemente ist irreversibel fixierbar. Die irreversible Fixierung der Schaltstellung jeden Schaltelements erfolgt, nachdem die optimale Schaltstellung eines jeden Schaltelements in einem iterativen Prüfverfahren im Laufe der Herstellung der den Sensor und seine Betriebsschaltung enthaltenden gebrauchsfähigen Baueinheit ermittelt wurde. Der Halbleiterspeicher enthält einen überschreibbaren und einen nicht-überschreibbaren Teil, wobei während des Prüfverfahrens Binärsignale zur Einstellung der Schaltstellung der Schaltelemente durch eine externe, mit der den Sensor und seine Betriebsschaltung enthaltenden Baueinheit signaltechnisch verbundenen Steuereinheit zunächst in den überschreibbaren Teil eingeschrieben und nach Ermittlung der optimalen Einstellwerte, ausgelöst durch ein Steuersignal der Steuereinheit, die Binärsignale vom überschreibbaren in den nichtüberschreibbaren Teil des Halbleiterspeichers übertragen werden.

Als Anfangswerte für den Abgleichvorgang werden Erfahrungswerte genommen, um so Anfangswerte für das Prüfverfahren bereitzustellen. Die als Steuereinheit ausgebildete Prüfeinrichtung belastet den Sensor in definierter Weise mit der Meßgröße und greift das Ausgangssignal des Prüflings zur Rückführung an die Steuereinheit ab, wodurch ein geschlossener Regelkreis verwirklicht wird. Durch einen Soll-/Istwertvergleich werden die erforderlichen Nennwerte für die beiden Parameter "Empfindlichkeit" und "Nullpunkt" ermittelt und von der Prüfeinrichtung mittels einer elektrischen Verbindung in den überschreibbaren Teil des Halbleiterspeichers des Prüflings eingeschrieben. Durch Wiederholung der Beaufschlagung des Sensors mit einer definierten Meßgröße sowie anschließender Auswertung des Meßvorgangs in der zuvor beschriebenen Weise können die am Prüfling vorgenommen Einstellungen überprüft und im Bedarfsfall korrigiert und immer weiter iterativ verbessert werden. Erst wenn der Verlauf des Ausgangssignals der Belastung des Sensors innerhalb festgelegter Grenzen folgt, erhält der Prüfling von der Prüfeinrichtung den Befehl, die in dem überschreibbaren Teil des Halbleiterspeichers hinterlegten Daten nun fest in den nicht-überschreibbaren Teil des Halbleiterspeichers zu übernehmen. Während dieser gesamten Abgleichprozedur wird der Prüfling nur ein einziges Mal in die Prüfeinrichtung eingelegt. Manuelle Eingriffe sind nicht erforderlich. Der Prüfling wird am Ende des Abgleichverfahrens der Prüfeinrichtung als fertig abgeglichenes Produkt entnommen. Das gesamte Abgleichverfahren wird an einem als Fertigerzeugnis ausgebildeten Prüfling ausgeführt, um eine nachfolgende nachteilige Beeinflussung der eingestellten Werte auszuschließen.

Ohne darauf beschränkt zu sein, ist die gefundene Lösung dann besonders vorteilhaft anwendbar, wenn der Sensor als mikromechanischer Beschleunigungssensor ausgebildet und wenn die Betriebsschaltung für den Sensor als ASIC ausgeführt ist, wodurch die Betriebsschaltung samt Sensor auf einer Fläche von nur wenigen Quadratmillimetern untergebracht werden kann, was dem heutigen Trend zur Miniaturisierung sehr entgegen kommt.

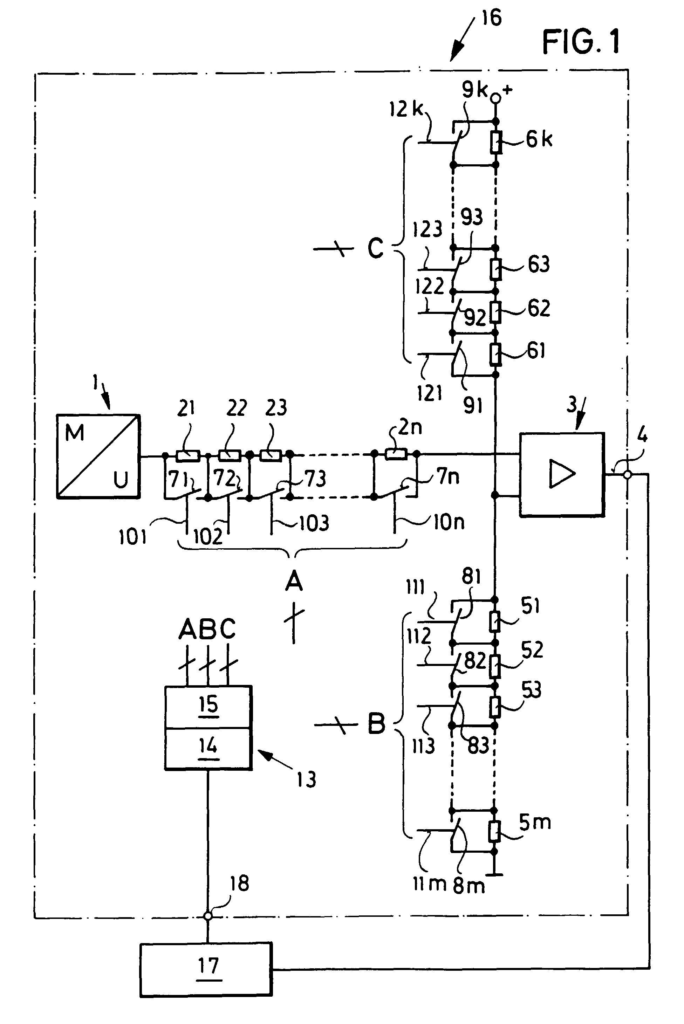

Nachstehend wird ein Ausführungsbeispiel der Erfindung anhand von 2 Figuren erläutert. Die **Figur 1** zeigt einen Sensor 1, der eine nicht-elektrische Meßgröße M erfaßt und deren Intensität in ein analoges Spannungssignal U wandelt. Das Ausgangssignal U des Sensors wird über eine Anzahl n seriell geschalteter Widerstände 21, 22, ..., 2n einem Signalverstärker 3 zugeleitet, an dessen Ausgang 4 nun ein transportfähiges analoges Signal ansteht. Der Verstärker 3 wird über einen Spannungsteiler voreingestellt, wobei der Spannungsteiler aus 2 Gruppen jeweils seriell verschalteteter Widerstände 51, 52, ..., 5m und 61, 62, ..., 6k besteht. Die Buchstaben n, m und k bezeichnen den Laufindex für das jeweilige Element der Betriebsschaltung des Sensors. Jedem für die Einstellung der Parameter "Sollbezugspunkt" und "Empfindlichkeit" des Verstärkers 3 verwendeten Widerstand 21, 22, ..., 2n, 51, 52, ..., 5m und 61, 62, ..., 6k ist jeweils ein Schaltelement 71, 72, ..., 7n, 81, 82, ..., 8m, 91, 92, ..., 9k parallel zugeordnet, wobei jedes Schaltelement über eine eigene Steuerleitung 101, 102, ..., 10n, 111, 112, ..., 11m und 121, 122, ..., 12k durch den logischen Signalstatus 0 oder 1 am Ausgang eines Halbleiterspeichers 13 betätigbar ist. In der Figur 1 sind die zu den Schaltelementen gehörenden Steuerleitungen der Einfachheit halber nach den Plazierungen der Schaltelemente in der Betriebsschaltung gruppenweise zu den Sammelleitungen A, B und C zusammengefaßt. Der Halbleiterspeicher 13 besitzt einen überschreibbaren Teil 14 und einen nicht-überschreibbaren Teil 15. Nachdem die Baueinheit 16, die den Sensor 1 und dessen Betriebsschaltung enthält, fertiggestellt ist, wird eine als Steuereinheit ausgebildete Prüfeinrichtung 17 über eine geeignete Signalschnittstelle 18 an die Baueinheit 16 angeschlossen, wobei auch das am Ausgang 4 der Betriebsschaltung anstehende Signal zur Prüfeinrichtung 17 zurückgeführt wird. Über die Prüfeinrichtung 17 werden in den überschreibbaren Teil 14 des Halbleiterspeichers 13 aus der Erfahrung gewonnene Anfangswerte eingeschrieben. Davon ausgehend werden die für den vorliegenden Sensor optimalen Einstellwerte ermittelt, wobei die Einstellwerte aus einem binären Datenwort bestehen und die Länge des Datenwortes der Anzahl der Schaltelemente entspricht. Je nach Schaltzustand des Schaltelements wird ein Einstellwiderstand kurzgeschlossen oder aktiviert. Nachdem iterativ durch einen fortlaufenden Vergleich des am Ausgang 4 der Betriebsschaltung anstehenden Signals mit einem vorgegebenen, mit Toleranzen versehenen Sollwert das optimale Datenwort zur Einstellung der Schaltelemente ermittelt wurde, wird das als optimal gefundene Datenwort durch einen Steuerbefehl der Prüfeinrichtung 17 vom überschreibbaren Teil 14 des Halbleiterspeichers 13 in dessen nichtüberschreibbaren Teil 15 übertragen. Danach wird die Baueinheit 16 von der Prüfeinrichtung 17 getrennt. Die vorgenommene Einstellung der Schaltelemente der Betriebsschaltung ist nun irreversibel fixiert. Fortan besteht keine Möglichkeit mehr, auf die Einstellung der Schaltelemente zuzugreifen.

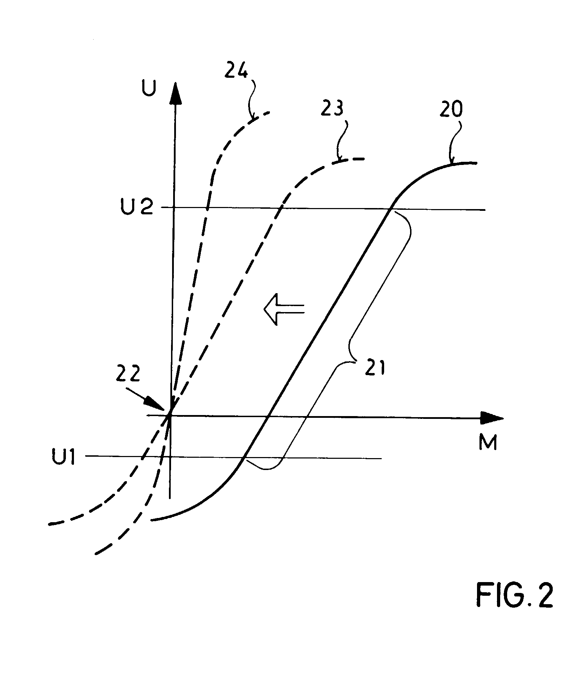

Durch die Einstellung der Schaltelemente der Betriebsschaltung erfolgt eine Festlegung des Sollbezugspunktes der Kennlinie des Sensors sowie eine Einstellung der Steigung dieser Kennlinie. Diese Wirkung wird in der **Figur 2** verdeutlicht. Das Ausgangssignal des Sensors weist zumindest in dessen bevorzugtem Meßbereich eine annähernd lineare Kennlinie 20 auf. Der für die beabsichtigte Verwendung des Sensors interessante Kennlinienausschnitt 21 zwischen den Grenzwerten U1 und U2 wird durch eine geeignete Wahl und Kombination der Einstellwiderstände parallel verschoben, so daß die verschobene Kennlinie 23 durch einen durch die beabsichtigte Verwendung des Sensors festgelegten Sollbezugspunkt 22 verläuft. Der Sollbezugspunkt 22 ist die Referenz für alle vom Sensor gelieferten Meßwerte. Ebenso kann die Kennlinie 21 durch die Wahl und Kombination der Einstellwiderstände in ihrer Steigung bzw. Empfindlichkeit beeinflußt werden, was einer Drehung der Kennlinie 24 um den Sollbezugspunkt 22 entspricht.

Obwohl in der Figur 1 nur serielle Anordnungen der Einstellwiderstände gezeigt sind, können auch parallele Anordnungen oder Kombinationen von seriellen und parallelen Anordnungen gewählt werden. Erfindungswesentlich ist die Beeinflussung der Einstellelemente durch digital steuerbare Schaltelemente. Die Schaltelemente werden vorzugsweise durch Halbleiterschalter ausgebildet. Die Schaltelemente werden digitalelektronisch in ihrem Schaltzustand fixiert. Statt ohmscher Widerstände können für die Einstellelemente auch Kondensatoren durch Anwendung der Switched-Capacitor-Technik in Betracht kommen.

Die erfindungsgemäße Kennlinieneinstellung kann in einem vollautomatisierten Arbeitsprozeß erfolgen. Die vorgeschlagene Betriebsschaltung für einen Sensor ist kostengünstig realisierbar, weil sie ohne eigene Rechnerintelligenz und nur mit einfachen und billigen Bauelementen auskommt. Im späteren Einsatz des Sensors erfolgt keine fortlaufende rechnerische Korrektur erfaßter Sensorsignale, da die am Ende des Fertigungsprozesses vorgenommene Einstellung der Parameter der Betriebsschaltung für den Sensor die gewünschte Funktionsfähigkeit des Sensors für alle seine beabsichtigten Meßaufgaben sicherstellt.

## Patentansprüche

1. Betriebsschaltung für einen Sensor (1) mit einem analogen Ausgangssignal (20), wobei das Ausgangssignal (20) des Sensors (1) zumindest in dessen bevorzugtem Meßbereich eine annähernd lineare Kennlinie (21) aufweist und wobei die Betriebsschaltung Einstellelemente aufweist,
dadurch gekennzeichnet,
daß den Einstellelementen Schaltelemente (71, 72, ..., 7n, 81, 82, ..., 8m, 91, 92, ..., 9k) zugeordnet sind, mit denen sowohl der Sollbezugspunkt (22) der Kennlinie (21) festgelegt als auch deren Steigung eingestellt wird.

2. Betriebsschaltung für einen Sensor nach Anspruch 1,
dadurch gekennzeichnet,
daß jedes Schaltelement (71, 72, ..., 7n, 81, 82, ..., 8m, 91, 92, ..., 9k) durch ein Binärsignal betätigbar ist, das in einem dem Sensor (1) zugeordneten Halbleiterspeicher (13) hinterlegt ist.

3. Betriebsschaltung für einen Sensor nach mindestens einem der vorangegangenen Ansprüche,
dadurch gekennzeichnet,
daß die Schaltstellung der Schaltelemente (71, 72, ..., 7n, 81, 82, ..., 8m, 91, 92, ..., 9k) irreversibel fixierbar ist.

4. Betriebsschaltung für einen Sensor nach Anspruch 3,
dadurch gekennzeichnet,
daß die irreversible Fixierung der Schaltstellung jeden Schaltelements erfolgt, nachdem die optimale Schaltstellung eines jeden Schaltelements in einem iterativen Prüfverfahren im Laufe der Herstellung der den Sensor (1) und seine Betriebsschaltung enthaltenden gebrauchsfähigen Baueinheit (16) ermittelt wurde.

5. Betriebsschaltung für einen Sensor nach Anspruch 2 oder einem anderen der vorangegangenen Ansprüche,
dadurch gekennzeichnet,
daß der Halbleiterspeicher (13) einen überschreibbaren Teil (14) und einen nicht-überschreibbaren Teil (15) enthält, wobei während des Prüfverfahrens Binärsignale zur Einstellung der Schaltstellung der Schaltelemente (71, 72, ..., 7n, 81, 82, ..., 8m, 91, 92, ..., 9k) durch eine externe, mit der den Sensor (1) und seine Betriebsschaltung enthaltenden Baueinheit (16) signaltechnisch verbundenen Steuereinheit (17) zunächst in den überschreibbaren Teil (14) eingeschrieben und nach iterativer Ermittlung der optimalen Einstellwerte durch einen Vergleich des am Ausgang 4 der Betriebsschaltung anstehenden Signals mit einem vorgegebenen, mit Toleranzen versehenen Sollwert, ausgelöst durch ein Steuersignal der Steuereinheit, die Binärsignale vom überschreibbaren Teil (14) in den nicht-überschreibbaren Teil (15) des Halbleiterspeichers (13) übertragen werden.

## Claims

1. Operating circuit for a sensor (1) with an analog output signal (20), the output signal (20) of the sensor (1) having an approximately linear characteristic (21) at least in the preferred measuring range of said sensor and the operating circuit having setting elements, characterized in that the setting elements are assigned switching elements (71, 72, ..., 7n, 81, 82, ..., 8m, 91, 92 ..., 9k) with which both the desired reference point (22) of the characteristic (21) is defined and the slope of the latter is set.

2. Operating circuit for a sensor according to Claim 1, characterized in that each switching element (71, 72, ..., 7n, 81, 82, ..., 8m, 91, 92 ..., 9k) can be actuated by a binary signal stored in a semiconductor memory (13) assigned to the sensor (1).

3. Operating circuit for a sensor according to at least one of the preceding claims, characterized in that the switched position of the switching elements (71, 72, ..., 7n, 81, 82, ..., ..., 8m, 91, 92 ..., 9k) can be irreversibly fixed.

4. Operating circuit for a sensor according to Claim 3, characterized in that the irreversible fixing of the switched position of each switching element takes place once the optimal switched position of each individual switching element has been determined in an iterative testing method during the production of the serviceable unit (16) containing the sensor (1) and its operating circuit.

5. Operating circuit for a sensor according to Claim 2 or another of the preceding claims, characterized in that the semiconductor memory (13) contains an overwritable part (14) and a non-overwritable part (15), it being the case that during the testing method binary signals for setting the switched position of the switching elements (71, 72, ..., 7n, 81, 82, ..., 8m, 91, 92, ..., 9k) are first written into the overwritable part (14) by an external control unit (17) connected in terms of signalling to the unit (16) containing the sensor (1) and its operating circuit, and after iterative determination of the optimal setting values by a comparison of the signal available at the output 4 of the operating circuit with a preset desired value provided with tolerances, initiated by a control signal of the control unit, the binary signals are transmitted from the overwritable part (14) to the non-overwritable part (15) of the semiconductor memory (13).

## Revendications

1. Circuit d'exploitation pour un capteur (1) avec un signal de sortie analogique (20), ledit signal de sortie (20) du capteur présentant, tout au moins dans la plage de mesure préférée de ce dernier, une caractéristique (21) approximativement linéaire et le circuit d'exploitation présentant des éléments de réglage,
caractérisé par le fait
qu'aux-dits éléments de réglage sont associés des éléments de commutation (71, 72,..., 7n, 81, 82, ..., 8m, 91, 92, ..., 9k) avec lesquels on détermine, d'une part, le point de référence théorique (22) de la caractéristique (21) et règle, d'autre part, la pente de celle-ci.

2. Circuit d'exploitation pour un capteur selon la revendication 1,
caractérisé par le fait
que chaque élément de commutation (71, 72,..., 7n, 81, 82, ..., 8m, 91, 92 ..., 9k) peut être actionné par un signal binaire qui est stocké dans une mémoire à semi-conducteurs (13) associée audit capteur (1).

3. Circuit d'exploitation pour un capteur selon au moins une des revendications précédentes,
caractérisé par le fait
que la position de commutation des éléments de commutation (71, 72,..., 7n, 81, 82, ..., 8m, 91, 92, ..., 9k) peut être fixée de manière irréversible.

4. Circuit d'exploitation pour un capteur selon la revendication 3,
caractérisé par le fait
que la fixation irréversible de la position de commutation de chaque élément de commutation est effectuée après que la position de commutation optimale de chaque élément de commutation a été déterminée, dans un procédé d'essai itératif, au cours de la fabrication du sous-ensemble opérationnel (16) contenant ledit capteur (1) et le circuit d'exploitation de ce dernier.

5. Circuit d'exploitation pour un capteur selon la revendication 2 ou l'une quelconque des revendications précédentes,
caractérisé par le fait
que la mémoire à semi-conducteurs (13) contient une partie effaçable/réenregistrable (14) et une partie non réenregistrable (15), des signaux binaires pour le réglage de la position de commutation des éléments de commutation (71, 72,..., 7n, 81, 82, ..., 8m, 91, 92, ..., 9k) étant d'abord, pendant le procédé d'essai, inscrits par une unité de commande externe (17) reliée, par la technique de signal, au sous-ensemble (16) contenant le capteur (1) et le circuit d'exploitation de ce dernier, dans la partie effaçable/réenregistrable (14) et, après la détermination itérative des valeurs de réglage optimales par une comparaison du signal appliqué à la sortie (4) du circuit d'exploitation avec une valeur de référence prédéterminée comportant des tolérances, déclenchés par un signal de commande de l'unité de commande, les signaux binaires étant transférés de la partie effaçable/réenregistrable (14) à la partie non réenregistrable (15) de la mémoire à semi-conducteurs (13).
